# EUROPÄISCHE PATENTSCHRIFT

(11) **EP 1 142 434 B1**
(45) Veröffentlichungstag und Bekanntmachung des Hinweises auf die Patenterteilung: **02.08.2006**
(21) Anmeldenummer: 99963514.7
(22) Anmeldetag: 13.12.1999
(51) Int. Cl.: H04Q 11/04

(54) **VERFAHREN ZUR DATENÜBERMITTLUNG ÜBER EIN PAKET-ORIENTIERTES KOMMUNIKATIONSNETZ**
METHOD FOR DATA TRANSMISSION VIA A PACKET-ORIENTED COMMUNICATIONS NETWORK
PROCEDE DE TRANSMISSION DE DONNEES POUR RESEAU DE COMMUNICATION PAR PAQUETS

(30) Priorität: 15.12.1998 EP 98123836
(43) Veröffentlichungstag der Anmeldung: 10.10.2001
(73) Patentinhaber: SIEMENS AKTIENGESELLSCHAFT, 80333 München (DE)
(72) Erfinder: FRAAS, Wolfgang, D-82515 Wolfratshausen (DE); HÜNLICH, Klaus, D-85467 Neuching (DE); NEMETH, Karlo, D-81827 München (DE)
(86) Internationale Anmeldenummer: PCT/EP1999/009866
(87) Internationale Veröffentlichungsnummer: WO 2000/036870

(56) Entgegenhaltungen:
- DE-A- 19 604 245
- GB-A- 2 270 820
- US-A- 5 793 766

## Beschreibung

Die Erfindung betrifft ein Verfahren zur Datenübermittlung zwischen zwei Kommunikationseinrichtungen über ein paket-orientiertes Kommunikationsnetz gemäß dem Oberbegriff des Patentanspruchs 1. Insbesondere betrifft die Erfindung ein Übertragungssystem zur Übertragung von zeitschlitz-orientierten Daten zwischen einer Vermittlungsabschlußeinrichtung - in der Literatur häufig mit 'Exchange Termination' ET bezeichnet - und einem Leitungsabschluß - in der Literatur häufig mit 'Line Termination' LT bezeichnet. Gemäß der Terminologie des Standards ITU-T G.960 (3/93), "access digital section for ISDN basic rate access" (International Telecommunication Union), insbesondere der Seiten 2 und 3, betrifft die Erfindung demnach eine Datenübertragung am sogenannten V-Referenzpunkt.

Beispielsweise ist aus der US-Patentschrift US-A-5793766 ein Verfahren für eine bidirektionale Datenübertragung zwischen, ein zeitschlitz-orientiertes - aus kanalindividuellen Informationssegmenten bestehendes - Datenübertragungsprotokoll unterstützenden Kommunikationseinrichtungen über ein paket-orientiertes Kommunikationsnetz bekannt. Hierbei werden die für eine Datenübermittlung über das paket-orientierte Kommunikationsnetz dienenden Datenpakete in ein erstes Teilpaket und in ein zweites Teilpaket unterteilt, wobei in einem ersten Teilpaket jeweils Daten unterschiedlicher kanalindividueller Informationssegmente übermittelt werden.

Ein Übertragungssystem zur Übertragung von zeitschlitz-orientierten Daten zwischen einer Vermittlungsabschlußeinrichtung und einem Leitungsabschluß ist üblicherweise Teil eines, eine Vermittlungseinrichtung und Teilnehmeranschlußeinrichtungen aufweisenden Kommunikationssystems. Die Teilnehmeranschlußeinrichtungen weisen dabei Teilnehmerschnittstellen zum Anschluß von Kommunikationsendgeräten an das Kommunikationssystem auf. Die Teilnehmeranschlußeinrichtungen sind gemäß dem Standard ITU-T G.960 über einen Leitungsabschluß und eine Vermittlungsabschlußeinrichtung mit der Vermittlungseinrichtung des Kommunikationssystems verbunden. Ein derartiges Kommunikationssystem dient dazu, schmalbandige Kommunikationsverbindungen zwischen an den Teilnehmeranschlußeinrichtungen angeschlossenen Kommunikationsendgeräten auf- bzw. abzubauen und eine schmalbandige Kommunikation - beispielsweise eine Sprach- oder Datenkommunikation - zwischen den Kommunikationsendgeräten zu ermöglichen.

In modernen Kommunikationssystemen erfolgt eine Datenübertragung zwischen der Vermittlungsabschlußeinrichtung und dem Leitungsabschluß dabei üblicherweise auf Basis des zeitschlitz-orientierten, aus einer periodischen Folge von kanalindividuellen Informationssegmenten - im weiteren als Zeitmultiplexkanal bezeichnet - gebildeten Datenformats IOM-2 (ISDN Oriented Modular Interface). Hierbei ist in der Regel jeder Teilnehmerschnittstelle einer Teilnehmeranschlußeinrichtung jeweils ein Zeitmultiplexkanal zugeordnet.

In der modernen Kommunikationstechnik besteht Bedarf an breitbandiger Übertragung von Informationen, wie z.B. von Fest- und Bewegtbildern bei Bildtelefonanwendungen bzw. von großen Datenmengen im Internet. Hierdurch steigt die Bedeutung von übertragungstechniken für hohe und variable Datenübertragungsraten (größer 100 MBit/s), die sowohl den Anforderungen der Datenübertragung (hohe Geschwindigkeit bei variabler Übertragungsbitrate) als auch den Anforderungen der Sprachdatenübertragung (Erhalt von zeitlichen Korrelationen bei einer Datenübertragung über ein Netz) Rechnung tragen, um so die für die verschiedenen Zwecke derzeit existierenden separaten Netze in einem Netz integrieren zu können. Ein bekanntes Datenübertragungsverfahren für hohe Datengeschwindigkeiten ist der sogenannte Asynchrone Transfer Modus (ATM). Eine Datenübertragung auf Basis des Asynchronen Transfer Modus ermöglicht derzeit eine variable Übertragungsbitrate von bis zu 622 Mbit/s.

Bei dem als Asynchronen Transfer Modus (ATM) bekannten zell-basierten Datenübertragungsverfahren werden für-den Datentransport Datenpakete fester Länge, sogenannte ATM-Zellen benutzt. Eine ATM-Zelle setzt sich aus einem, für den Transport einer ATM-Zelle relevante Vermittlungsdaten enthaltenden, fünf Bytes langem Zellkopf, dem sogenannten 'Header' und einem 48 Bytes langem Nutzdatenfeld, der sogenannten 'Payload' zusammen.

Eine Datenübertragung über ein ATM-basiertes Kommunikationsnetz erfolgt im allgemeinen im Rahmen von sogenannten virtuellen Pfaden bzw. in den virtuellen Pfaden enthaltenen virtuellen Kanälen. Hierzu werden bei einem Verbindungsaufbau vor Beginn der eigentlichen Nutzdatenübertragung durch Austausch von Signalisierungsinformationen Verbindungstabellen mit aus einer sogenannten Virtuellen-Kanal-Identifizierung und aus einer sogenannten Virtuellen-Pfad-Identifizierung bestehenden Vermittlungsinformation in den jeweiligen ATM-Netzknoten des ATM-basierten Kommunikationsnetzes eingerichtet. In den Verbindungstabellen ist der Virtuellen-Kanal-Identifizierung ein sogenannter VCI-Wert und der Virtuellen-Pfad-Identifizierung ein sogenannter VPI-Wert zugewiesen. Durch die in der Verbindungstabelle eines ATM-Netzknotens eingetragene Vermittlungsinformation ist festgelegt, wie die virtuellen Pfade bzw. in den virtuellen Pfaden enthaltene virtuelle Kanäle der an dem ATM-Netzknoten ein- und ausgehenden Verbindungen durch die Signalisierung einander zugeordnet sind, d.h. welcher Eingang mit welchem Ausgang des ATM-Netzknotens vermittlungstechnisch verknüpft ist. Über diese virtuellen Verbindungen (virtuellen Pfade und virtuellen Kanäle) übermittelte ATM-Zellen weisen im Zellkopf im wesentlichen aus einem VPI-Wert und einem VCI-Wert bestehende Vermittlungsdaten auf. Am Eingang eines ATM-Netzknotens werden die ATM-Zellkopf-Daten bearbeitet, d.h. die darin angeordneten Vermittlungsdaten erfaßt und bewertet. Anschließend werden die ATM-Zellen durch den ATM-Netzknoten anhand der in der Verbindungstabelle gespeicherten Vermittlungsinformation an einen, ein bestimmtes Ziel repräsentierenden Ausgang des ATM-Netzknotens durchgeschaltet.

In der deutschen Patentanmeldung mit dem amtlichen Kennzeichen 198 45 038.9 wurde bereits ein Übertragungssystem zwischen einer Vermittlungsabschlußeinrichtung und einem Leitungsabschluß vorgeschlagen, bei dem die Übertragung über ein ATM-basiertes Kommunikationsnetz realisiert wird. Hierbei werden Teilnehmerschnittstellen zum Anschluß von Kommunikationsendgeräten durch an das ATM-basierte Kommunikationsnetz angeschlossene ATM-Übergabeeinheiten - in der Literatur häufig mit ATM-Hub bezeichnet - zur Verfügung gestellt. Die Vermittlungsabschlußeinrichtung des Kommunikationssystems und der durch die ATM-Übergabeeinheit realisierte Leitungsabschluß weisen dabei jeweils eine ATM-Anschlußeinheit auf, über die einerseits eine Verbindung mit dem ATM-basierten Kommunikationsnetz realisiert wird und andererseits eine bidirektionale Umwandlung zwischen dem üblicherweise für eine Datenübermittlung zwischen der Vermittlungsabschlußeinrichtung und dem Leitungsabschluß vorgesehenen IOM-2-Datenformat und dem ATM-Datenformat erfolgt.

Die bidirektionale Umwandlung zwischen dem zeitschlitz-orientierten IOM-2-Datenformat und dem zell-basierten ATM-Datenformat erfolgt dabei gemäß zweier unterschiedlicher Umwandlungsmodi. Gemäß des ersten Umwandlungsmodus werden basierend auf der Vorschrift CES 2.0 des ATM-Forums die zeitschlitz-orientierten Daten byteweise in ATM-Zellen gemäß der ersten ATM-Anpassungsschicht AAL1 verpackt. Die ATM-Anpassungsschicht AAL (ATM Adaption Layer) dient dabei einer Anpassung des ATM-Datenformats (entspricht der Schicht 2 des OSI-Referenzmodells) auf die Vermittlungsschicht (Schicht 3) des OSI-Referenzmodells (Open System Interconnection). Gemäß des zweiten Umwandlungsmodus werden die zeitschlitz-orientierten Daten byteweise in, nach der zweiten ATM-Anpassungsschicht AAL2 substrukturierte ATM-Zellen verpackt.

Der vorliegenden Erfindung liegt die Aufgabe zugrunde, ein alternatives Verfahren anzugeben, durch welches eine bidirektionale Datenübertragung zwischen den Kommunikationsendgeräten und der Vermittlungsanlage erfolgen kann.

Gelöst wird die Aufgabe ausgehend von den Merkmalen des Oberbegriffs des Patentanspruchs 1 durch dessen kennzeichnende Merkmale.

Zum besseren Verständnis der Funktionsweise einer Übertragung von zeitschlitz-orientierten Daten zwischen einer Vermittlungsabschlußeinrichtung und einem Leitungsabschluß erscheint es erforderlich zunächst noch einmal auf bekannte Prinzipien näher einzugehen.

Eine Übertragung der zeitschlitz-orientierten Daten zwischen der Vermittlungsabschlußeinrichtung und dem Leitungsabschluß erfolgt üblicherweise auf Basis des, z.B. aus der Produktschrift "ICs for Communications - IOM®-2 Interface Reference Guide" der Firma Siemens, München, 3/91, Bestell-Nr. B115-H6397-X-X-7600, insbesondere der Seiten 6 bis 12, bekannten Datenformats IOM-2.

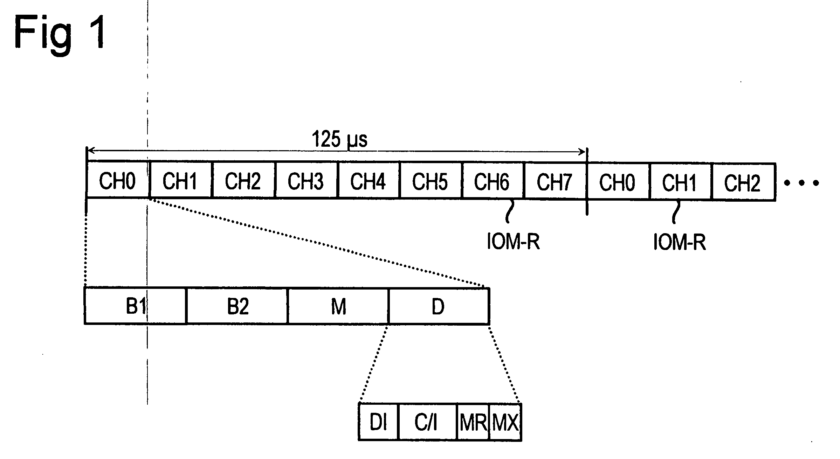

Einem schnelleren Verständnis der Zusammenhänge dient Fig.1, die eine schematische Darstellung des IOM-2-Datenformats zeigt gemäß dem Zeitmultiplexrahmen IOM-R mit einer Länge von 125µs periodisch übertragen werden. Ein derartiger Zeitmultiplexrahmen IOM-R ist in Zeitmultiplexkanäle oder Sub-Rahmen CH0,..,CH7 - in der Literatur auch häufig einfach mit 'Channel' bezeichnet - aufgeteilt. Die Sub-Rahmen CH0,.., CH7 sind wiederum jeweils in zwei 8 Bit lange Nutzdatenkanäle B1, B2, in einen 8 Bit langen Monitorkanal M, in einen 2 Bit langen Steuerinformationskanal DI, in einen 4 Bit langen Statuskanal C/I (Command / Indicate) und in zwei jeweils 1 Bit lange Monitorstatuskanäle MR, MX untergliedert. Der Steuerinformationskanal DI, der Statuskanal C/I und die beiden Monitorstatuskanäle MR, MX werden üblicherweise zusammengefaßt als Steuerkanal D bezeichnet.

Über die Nutzdatenkanäle B1, B2 erfolgt eine Nutzdatenübermittlung zwischen an einen IOM-2-Bus angeschlossenen Einrichtungen mit einer Übertragungsbitrate von jeweils 64 kBit/s. Über den Steuerinformationskanal D erfolgt eine Übermittlung von den Nutzdaten zugeordneten Steuerinformationen mit einer Übertragungsbitrate von 16 kBit/s. Der Monitorkanal dient unter anderem zur Konfigurierung von an einem IOM-2-Bus angeschlossenen Einrichtungen ausgehend von einem sogenannten 'IOM-2-Busmaster'. Über die Monitorstatuskanäle MR (Monitor Read) und MX (Monitor Transmit) wird festgelegt, ob Daten von einer an den IOM-2-Bus angeschlossenen Einrichtung von IOM-2-Bus gelesen (MR = 1, MX = 0) oder auf den IOM-2-Bus ausgegeben (MR = 0, MX = 1) werden. Über den Statuskanal C/I werden Informationen über, im Rahmen einer Datenübermittlung zwischen zwei an einem IOM-2-Bus angeschlossenen Einrichtungen bestehenden Echtzeitanforderungen ausgetauscht.

Bei einer Datenübertragung über ein ATM-basiertes Kommunikationsnetz mittels ATM-Zellen gemäß der ersten ATM-Anpassungsschicht AAL1 ist lediglich eine konstante Übertragungsbitrate zwischen der Vermittlungsanlage und einer ATM-Übergabeeinheit realisierbar, da unabhängig davon, ob tatsächlich Daten übertragen werden oder nicht, alle Kanalinformationen - der beiden Nutzdatenkanäle B1, B2, des Monitorkanals M und des Steuerkanals D - des IOM-2-Datenformats übermittelt werden müssen. Bei einer Datenübertragung über das ATM-basierte Kommunikationsnetz mittels ATM-Zellen gemäß der zweiten ATM-Anpassungsschicht AAL2 ist dagegen eine variable Übertragungsbitrate zwischen der Vermittlungsanlage und einer ATM-Übergabeeinheit realisierbar, da die Möglichkeit besteht, nur einzelne, aktuell Daten übertragende Kanalinformationen zu übermitteln.

Ein wesentlicher Vorteil des erfindungsgemäßen Verfahrens besteht nun darin, daß das Verfahren auf einfache Weise in bereits bestehende Systeme implementiert werden kann ohne Veränderungen an der Schnittstelle zwischen Vermittlungsanlage und ATM-Übergäbeeinheit - gemäß der Terminologie des Standards ITU-T G.960 mit V-Referenzpunkt bezeichnet - vornehmen zu müssen.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Substrukturierung des Nutzdatenbereiches eines, der Datenübermittlung dienenden Datenpaketes in Teilpakete, denen jeweils kanalindividuelle Informationen des zeitschlitz-orientierten Datenformats zuweisbar sind, durch eine Nichtübermittlung einzelner, keine Nutzdaten enthaltenden Teilpakete auf einfache Weise eine variable Übertragungsbitrate zwischen der Vermittlungsanlage und den Übergabeeinheiten realisierbar ist.

Ein weiterer Vorteil von in den Unteransprüchen definierten Ausgestaltungen der Erfindung besteht darin, daß für eine bidirektionale Umwandlung zwischen dem zeitschlitz-orientierten IOM-2-Datenformat und dem paket-orientierten ATM-Datenformat gemäß der fünften ATM-Anpassungsschicht AAL5 bereits vorhandene AAL5-Bausteine verwendet werden können, so daß keine neuen Entwicklungen nötig sind.

Ein weiterer Vorteil von in den Unteransprüchen definierten Ausgestaltungen der Erfindung besteht darin, daß durch eine Datenübermittlung zwischen einem Kommunikationsendgerät und der Vermittlungsanlage über eine, zwischen der Vermittlungsanlage (PBX) und derjenigen ATM-Übergabeeinheit, über die das Kommunikationsendgerät mit dem ATM-basierten Kommunikationsnetz verbunden ist bestehende Festverbindung oder alternativ über eine individuell für diese Datenübermittlung aufgebaute Verbindung die 'Signalisierungslast' bzw. der Administrationsaufwand im bzw. für das Kommunikationsnetz auf einfache Weise an aktuelle Begebenheiten angepaßt werden kann.

Ein Ausführungsbeispiel der Erfindung wird im folgenden anhand der Zeichnung näher erläutert.

Dabei zeigen:
- Fig. 2:: ein Strukturbild zur schematischen Darstellung der am erfindungsgemäßen Verfahren beteiligten wesentlichen Funktionseinheiten;
- Fig. 3:: ein Strukturbild zur schematischen Darstellung einer in Teilpakete untergliederten ATM-Zelle;
- Fig. 4:: ein Strukturbild zur schematischen Darstellung der Umwandlung des zeitschlitz-orientierten IOM-2-Datenformats in das ATM-Datenformat gemäß der fünften ATM-Anpassungsschicht AAL5;
- Fig. 5:: ein Ablaufdiagramm zur Veranschaulichung der bei einer Datenübermittlung ablaufenden wesentlichen Verfahrensschritte gemäß einer ersten Anschlußart der Kommunikationsendgeräte;
- Fig. 6:: ein Ablaufdiagramm zur Veranschaulichung der bei einer Datenübermittlung ablaufenden wesentlichen Verfahrensschritte gemäß einer zweiten Anschlußart der Kommunikationsendgeräte.

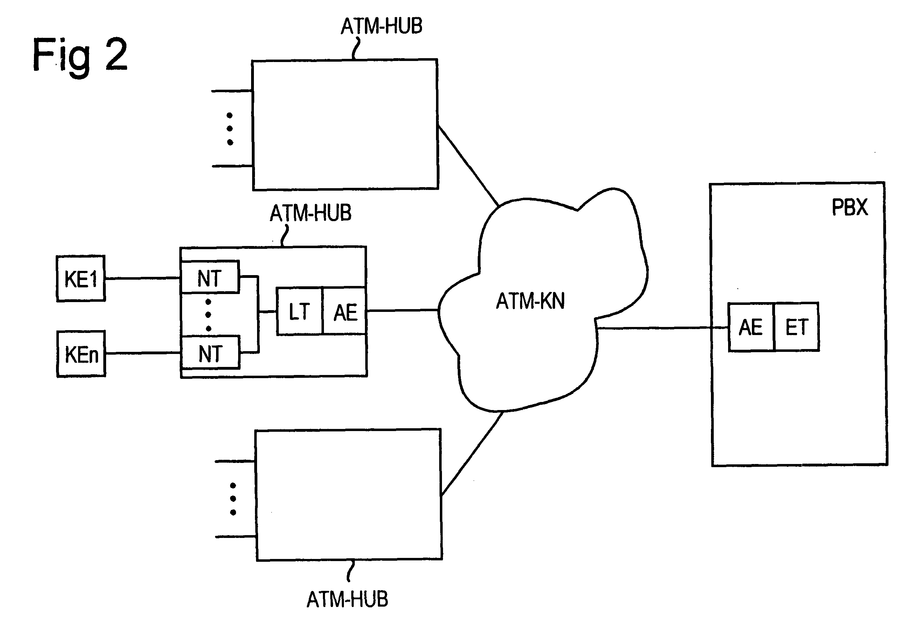

Fig. 2 zeigt eine schematische Darstellung einer Vermittlungsanlage PBX (Privat Branche Exchange) mit einer darin angeordneten Vermittlungsabschlußeinheit ET (Exchange Termination). Die Vermittlungsabschlußeinheit ET ist über eine Anschlußeinheit AE mit einem ATM-basierten Kommunikationsnetz ATM-KN verbunden. An das ATM-basierte Kommunikationsnetz ATM-KN sind des weiteren ATM-Übergabeeinheiten ATM-HUB angeschlossen, welche Teilnehmerschnittstellen zum Anschluß von Kommunikationsendgeräten an das ATM-basierte Kommunikationsnetz ATM-KN aufweisen. Beispielhaft sind Kommunikationsendgeräte KE1,...,KEn dargestellt.

über eine ATM-Übergabeeinheit werden üblicherweise mittels S₀-Schnittstellen ISDN-Kommunikationsendgeräte (Integrated Services Digital Network) oder mittels daraus abgeleiteten Schnittstellen, wie beispielsweise Uₚ₀-Schnittstellen digitale Kommunikationsendgeräte mit dem ATM-basierten Kommunikationsnetz ATM-KN verbunden. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Des weiteren besteht generell die Möglichkeit über a/b-Schnittstellen analoge Kommunikationsendgeräte mit dem ATM-basierten Kommunikationsnetz ATM-KN zu verbinden.

Ein Anschluß der Kommunikationsendgeräte KE1,...,KEn an die ATM-Übergabeeinheit ATM-HUB, d.h. die Bereitstellung der Teilnehmerschnittstellen erfolgt durch die ATM-Übergabeeinheit ATM-HUB gemäß der Terminologie des Standards ITU-T G.960 durch Netzabschlüsse NT (Network Termination). Gemäß des Standards ITU-T G.960 (International Telecommunication Union) sind die Netzabschlüsse NT einer ATM-Übergabeeinheit ATM-HUB über einen in der ATM-Übergabeeinheit ATM-HUB angeordneten Leitungsabschluß LT mit der Vermittlungsabschlußeinrichtung ET der Vermittlungsanlage PBX verbunden. Für eine Datenübermittlung über das ATM-basierte Kommunikationsnetz ATM-KN ist der Leitungsabschluß LT - entsprechend der Vermittlungsabschlußeinrichtung ET der Vermittlungsanlage PBX - über eine Anschlußeinheit AE mit dem ATM-basierten Kommunikationsnetz ATM-KN verbunden.

Durch die Anschlußeinheiten AE erfolgt eine bidirektionale Umwandlung zwischen dem üblicherweise für eine Datenübermittlung zwischen der Vermittlungsabschlußeinrichtung und dem Leitungsabschluß vorgesehenen zeitschlitz-orientierten IOM-2-Datenformat und dem paket-orientierten ATM-Datenformat gemäß der fünften ATM-Anpassungsschicht AAL5.

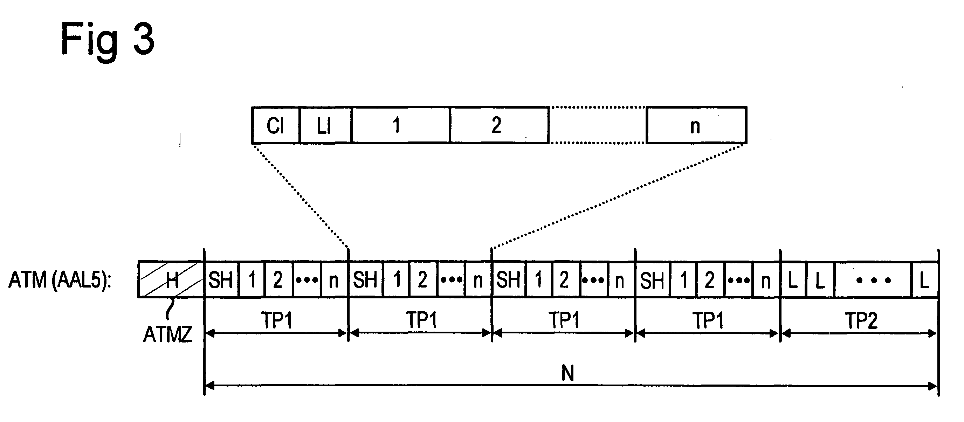

Fig. 3 zeigt eine schematische Darstellung einer in Teilpakete gemäß der fünften ATM-Anpassungsschicht AAL5 untergliederten ATM-Zelle. Die ATM-Anpassungsschicht AAL (ATM Adaption Layer) dient dabei einer Anpassung des ATM-Zellformats (Schicht 2 des OSI-Referenzmodells) auf die Vermittlungsschicht (Schicht 3) des OSI-Referenzmodells (Open System Interconnection).

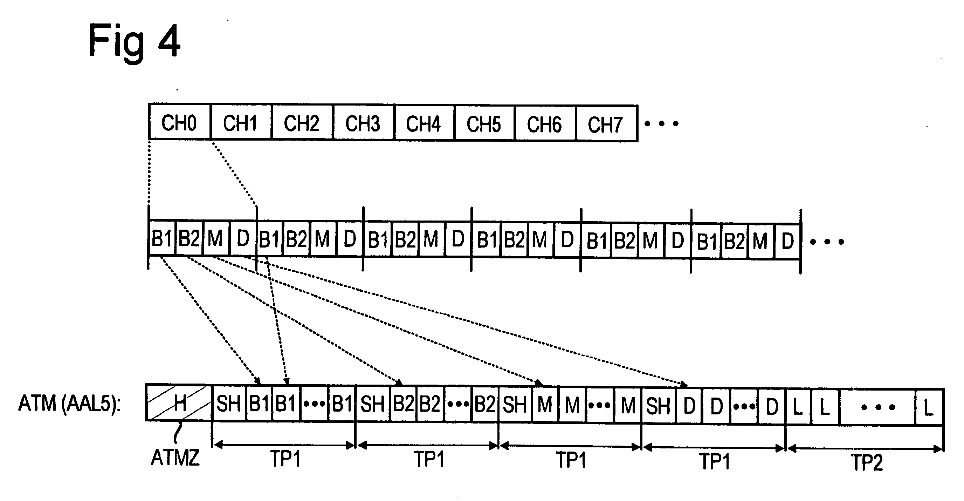

Eine ATM-Zelle ATMZ setzt sich allgemein aus einem, für den Transport einer ATM-Zelle ATMZ relevante Vermittlungsdaten enthaltenden, fünf Bytes langem Zellkopf H - in der Literatur häufig als 'Header' bezeichnet - und einem 48 Bytes langem Nutzdatenfeld N - in der Literatur häufig als 'Payload' bezeichnet - zusammen. Bei einer gemäß der fünften ATM-Anpassungsschicht AAL5 untergliederten ATM-Zelle ATMZ ist der Nutzdatenbereich N in mindestens ein erstes Teilpaket TP1 und in ein zweites Teilpaket TP2 untergliedert. Beispielhaft sind in der Figur 4 erste Teilpakete TP1 dargestellt.

Ein erstes Teilpaket TP1 ist wiederum in einen 1 Byte langen Paket-Zellkopf SH und in ein Nutzdatenfeld definierter Länge unterteilt. Der Paket-Zellkopf SH setzt sich aus einer 3 Bit langen Segment-Identifizierung CI - häufig auch als 'Channel Identifier' bezeichnet - und einer 5 Bit langen Längen-Identifizierung LI - häufig auch als 'Length Identifier' bezeichnet - zusammen. Mittels der 5 Bit langen Längen-Identifizierung LI sind prinzipiell Nutzdatenfelder der ersten Teilpakete TP1 mit einer Länge n von 2⁵ = 32 Byte definierbar. Vorteilhafterweise weisen die ersten Teilpakete TP1 jedoch eine Länge von 10 Byte auf. Hierdurch wird eine Übereinstimmung mit dem ATM-Form-Standard af-vtoa-0083.000 "Voice and Telephony over ATM to the Desktop Specification", 5/1997, erreicht, bei dem für eine Datenübertragung gemäß der fünften ATM-Anpassungsschicht AAL5 eine maximale Nutzdatenfeldlänge von 40 Byte vorgesehen ist.

Das zweite Teilpaket TP2 dient vorzugsweise dem Transport von Leerdaten L kann beispielsweise aber auch als sogenanntes Quersummen-Prüffeld - in der Literatur häufig als 'Cyclic Redundancy Check' CRC bezeichnet - verwendet werden. Die Länge des zweiten Teilpaketes TP2 wird so gewählt, daß die Gesamtlänge der in einer ATM-Zelle ATMZ übermittelten ersten Datenpakete TP1 und des zweiten Teilpaketes TP2 der Länge des Nutzdatenbereiches N der ATM-Zelle ATMZ also 48 Byte entspricht. Die Länge eines zweiten Teilpaketes TP2 beträgt jedoch für eine Anpassung an den Standard af-vtoa-0083.000 des ATM-Forums mindestens 8 Byte.

Fig. 4 zeigt in einer schematischen Darstellung die Umwandlung des zeitschlitz-orientierten IOM-2-Datenformats in das paket-orientierte ATM-Datenformat gemäß der fünften ATM-Anpassungsschicht AAL5. Bei einer Umwandlung des zeitschlitz-orientierten IOM-2-Datenformats auf das paket-orientierte ATM-Datenformat wird jedem Sub-Rahmen CHx eine eindeutige VPI/VCI-Adresse für eine Übermittlung über das ATM-basierte Kommunikationsnetz ATM-KN zugeordnet, d.h. unterschiedlichen Sub-Rahmen CHx zugeordnete Daten werden in separaten ATM-Zellen ATMZ mit einer eindeutigen im Zellkopf H der ATM-Zelle ATMZ hinterlegten VPI/VCI-Adresse - beispielhaft für den Sub-Rahmen CH0 dargestellt - übermittelt.

Im Rahmen der fünften ATM-Anpassungsschicht AAL5 besteht, wie bereits oben beschrieben, die Möglichkeit den Nutzdatenbereich N einer ATM-Zelle ATMZ in erste und zweite Teilpakete TP1, TP2 zu untergliedern. Durch die Untergliederung einer ATM-Zelle ATMZ in erste und zweite Teilpakete TP1, TP2 können innerhalb einer ATM-Verbindung mittels der 3 Bit langen Segment-Identifizierung CI mehrere Kanäle definiert werden, die alle mit der gleichen ATM-Adresse - bestehend aus einem VPI-Wert und einem VCI-Wert - angesprochen werden. Hierbei wird beispielhaft für den ersten Nutzdatenkanal B1 eine CI-Adresse 011, für den zweiten Nutzdatenkanal B2 eine CI-Adresse 100, für den Monitorkanal M eine CI-Adresse 010 und für den Steuerkanal D eine CI-Adresse 001 gewählt. Im Rahmen einer Datenübermittlung zwischen der Vermittlungsanlage PBX und einer ATM-Übergabeeinheit ATM-HUB insbesondere einer Vermittlungsabschlußeinrichtung ET und eines Leitungsabschlusses LT besteht somit die Möglichkeit nur Daten derjenigen Kanäle - des ersten Nutzdatenkanals B1, des zweiten Nutzdatenkanals B2, des Monitorkanals M und des Steuerkanals D - zu übermitteln, über die aktuell tatsächlich Daten übertragen werden.

Im vorliegenden Ausführungsbeispiel wird nacheinander für den ersten Nutzdatenkanal B1, den zweiten Nutzdatenkanal B2, den Monitorkanal M und den Steuerkanal D eines Sub-Rahmens CHx - beispielhaft für den Sub-Rahmen CH0 dargestellt - jeweils ein erstes Teilpaket TP1 gleicher Länge definiert und im Nutzdatenbereich der ATM-Zelle ATMZ übertragen. Beispielhaft sind in der Figur vier erste Teilpakete TP1 mit einer jeweiligen Länge von 10 Byte dargestellt. Im Anschluß an das dem Steuerkanal C zugeordnete erste Teilpaket TP1 wird ein zweites Teilpaket TP2 übermittelt. Die Länge des zweiten Teilpaketes TP2 wird dabei derart gewählt, daß die Gesamtlänge der in einer ATM-Zelle ATMZ übermittelten ersten Datenpakete TP1 und des zweiten Teilpaketes TP2 der Länge des Nutzdatenbereiches N der ATM-Zelle ATMZ also 48 Byte entspricht. Im vorliegenden Ausführungsbeispiel weist das zweite Teilpaket TP2 somit eine Länge von 8 Byte auf.

Eine Anbindung der Kommunikationsendgeräte KE1,...,KEn an die Vermittlungsanlage PBX über das ATM-basierte Kommunikationsnetz ATM-KN kann gemäß zweier unterschiedlicher Anschlußarten erfolgen, die im folgenden näher beschreiben werden.

Gemäß einer ersten Anschlußart wird zwischen der Vermittlungsanlage PBX und den ATM-Übergabeeinheiten ATM-HUB des ATM-basierten Kommunikationsnetzes ATM-KN jeweils eine sogenannte, auf der fünften ATM-Anpassungsschicht AAL5 basierende Festverbindung eingerichtet, wobei der Festverbindung für eine vorgebbare Zeitspanne eine einstellbare Übertragungsbitrate zugesichert wird. In dem ATM-basierten Kommunikationsnetz ATM-KN entspricht dies dem Einrichten jeweils einer virtuellen Verbindung zwischen der Vermittlungsanlage PBX und den ATM-Übergabeeinheiten ATM-HUB des ATM-basierten Kommunikationsnetzes ATM-KN, die gegebenenfalls auch mehrere virtuelle Übertragungskanäle enthalten kann. Das Einrichten der Festverbindung erfolgt hierbei durch administrative Maßnahmen, im Rahmen derer jedem über das ATM-basierte Kommunikationsnetz ATM-KN an der Vermittlungsanlage PBX angeschlossenen Kommunikationsendgerät KE1,...,KEn individuell ein Übertragungskanal - in der Literatur häufig mit 'Virtual Channel Connection' VCC bezeichnet - zugeordnet werden kann.

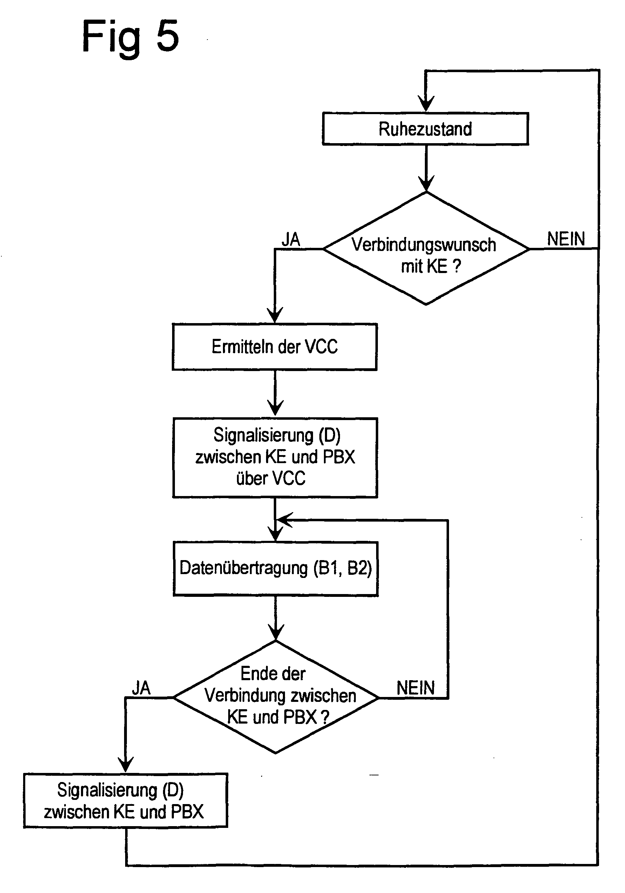

Fig. 5 zeigt ein Ablaufdiagramm zur Veranschaulichung der bei einer Datenübermittlung zwischen einem Kommunikationsendgerät KE1,...,KEn und der Vermittlungsanlage PBX im Rahmen einer zwischen der Vermittlungsanlage PBX und der, die Anschlußeinheit AE für das betreffende Kommunikationsendgerät KE1,..., KEn zur Verfügung stellenden ATM-Übergabeeinheit ATM-HUB bestehenden Festverbindung ablaufenden wesentlichen Verfahrensschritte. Ausgehend von einem Ruhezustand des Kommunikationsendgerätes KE1,...,KEn wird bei einem auftretenden Verbindungswunsch mit dem Kommunikationsendgerät KE1,...,KEn von der entsprechenden ATM-Übergabeeinheit ATM-HUB die Heimat-Vermittlungsanlage - in der Literatur häufig mit 'Home-PBX' bezeichnet - des Kommunikationsendgerätes KE1,...,KEn, d.h. diejenige Vermittlungsanlage PBX, an welcher das Kommunikationsendgerät KE1,...,KEn registriert ist, ermittelt. Anschließend wird der, dem Kommunikationsendgerät KE1,...,KEn für eine Datenübermittlung über das ATM-basierte Kommunikationsnetz ATM-KN zugeordneten Übertragungskanal VCC ermittelt, und somit eine virtuelle Verbindung über das ATM-basierte Kommunikationsnetz ATM-KN im Rahmen der bereits bestehenden Festverbindung bereitgestellt. Durch eine Verwendung einer auf der fünften ATM-Anpassungsschicht AAL5 basierenden Verbindung besteht die Möglichkeit über die Verbindung nur Daten derjenigen-Kanäle des IOM-2-Datenformats zu übermitteln, über die aktuell Daten zu übermitteln sind.

In einem nächsten Schritt erfolgt eine Übermittlung der für den Aufbau einer Verbindung zwischen dem Kommunikationsendgerät KE1,...,KEn und der Vermittlungsanlage PBX notwendigen Signalisierungsinformationen über den Steuerkanal D des IOM-2-Datenformats, d.h. es wird eine logische Verbindung zwischen dem Kommunikationsendgerät KE1,...,KEn und der Vermittlungsanlage PBX aufgebaut. Anschließend erfolgt die bidirektionale Nutzdatenübermittlung zwischen dem Kommunikationsendgerät KE1,...,KEn und der Vermittlungsanlage PBX über einen oder alternativ über beide Nutzdaterkkanäle B1, B2 des IOM-2-Datenformats. Soll nachfolgend die logische Verbindung zwischen dem Kommunikationsendgerät KE1,...,KEn und der Vermittlungsanlage PBX - beispielsweise infolge eines Auflegens eines Hörers am Kommunikationsendgerät KE1,...,KEn - beendet werden, so erfolgt dies durch eine dementsprechende Signalisierung zwischen dem Kommunikationsendgerät KE1,...,KEn und der Vermittlungsanlage PBX über den Steuerkanal D. Nach Beendigung der Verbindung befindet sich das Kommunikationsendgerät KE1,..., KEn wieder im Ruhezustand, d.h. dem ATM-basierten Kommunikationsnetz ATM-KN werden auch keine Übermittlungsressourcen durch den Übertragungskanal VCC entzogen.

Derartige Festverbindungen können in einem Kommunikationsnetz je nach Größe und zur Verfügung stehender Übertragungsbandbreite dieses Kommunikationsnetzes jedoch nur in einer begrenzten Anzahl eingerichtet werden. Des weiteren müssen bei sich ändernden Kommunikationsbeziehungen zwischen den beteiligten Kommunikationseinheiten alle betroffenen Kommunikations- bzw. Datenverbindungen - in einem ATM-basierten Kommunikationsnetz alle in einem virtuellen Pfad enthaltenen virtuellen Übertragungskanäle - berücksichtigt werden. Dies führt dazu, daß der Administrationsaufwand für derartige Festverbindungen sehr schnell mit der Größe des Kommunikationsnetzes ansteigt.

Um den Administrationsaufwand zu verringern kann ein Anschluß der Kommunikationsendgeräte KE1,...,KEn an die Vermittlungsanlage PBX gemäß einer zweiten Anschlußart alternativ durch sogenannte signalisierte Verbindungen erfolgen, d.h. eine Verbindung zwischen der Vermittlungsanlage PBX und der, die Anschlußeinheit AE für das betreffende Kommunikationsendgerät KE1,..., KEn zur Verfügung stellenden ATM-Übergabeeinheit ATM-HUB über das ATM-basierte Kommunikationsnetz ATM-KN wird erst im Rahmen einer tatsächlich zu erfolgenden Datenübermittlung eingerichtet. Dies hat jedoch zur Folge, daß im Gegensatz zu den beschriebenen Festverbindungen die 'Signalisierungslast' im ATM-basierten Kommunikationsnetz ATM-KN ansteigt.

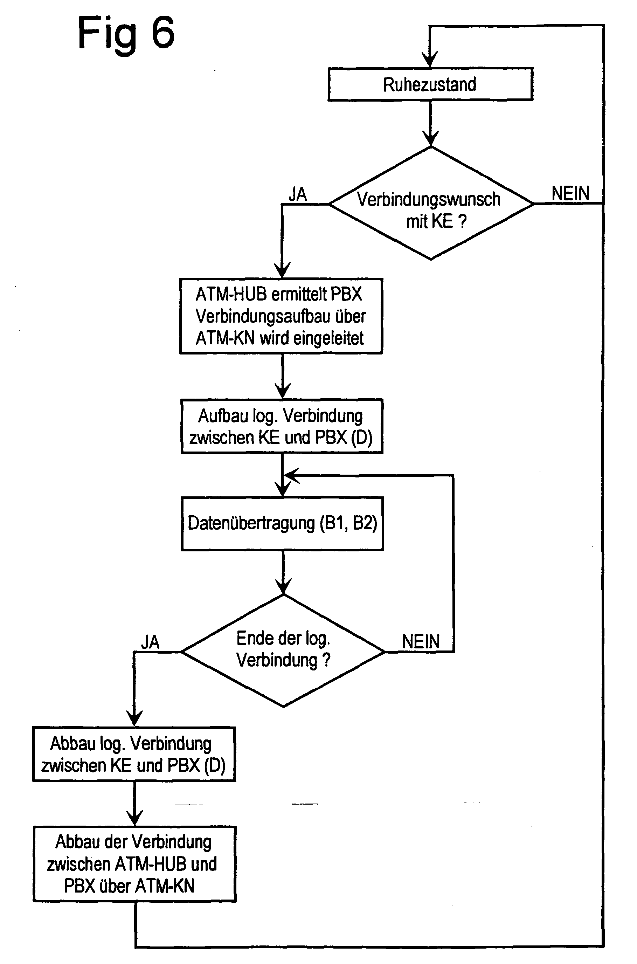

Fig. 6 zeigt ein Ablaufdiagramm zur Veranschaulichung der bei einer Datenübermittlung zwischen einem Kommunikationsendgerät KE1,...,KEn und der Vermittlungsanlage PBX im Rahmen einer signalisierten Verbindung ablaufenden wesentlichen Verfahrensschritte. Ausgehend von einem Ruhezustand des Kommunikationsendgerätes KE1,...,KEn wird bei einem auftretenden Verbindungswunsch mit dem Kommunikationsendgerät KE1,...,KEn von der entsprechenden ATM-Übergabeeinheit ATM-HUB die Heimat-Vermittlungsanlage des Kommunikationsendgerätes KE1,...,KEn ermittelt. Anschließend wird durch die ATM-Übergabeeinheit ATM-HUB eine, auf der fünften ATM-Anpassungsschicht AAL basierende Verbindung mit den, für das IOM-2-Datenfomat benötigen Kanälen - dem ersten Nutzdatenkanal B1, dem zweiten Nutzdatenkanal B2, dem Monitorkanal M und dem Steuerkanal D - zwischen der ATM-Übergabeeinheit ATM-HUB und der Vermittlungsanlage PBX über das ATM-basierte Kommunikationsnetz ATM-KN aufgebaut. Diese Verbindung wird nach ihrem Aufbau dem Kommunikationsendgerät KE1,...,KEn für eine Datenübermittlung zwischen dem Kommunikationsendgerät KE1,...,KEn und der Vermittlungsanlage PBX zur Verfügung gestellt. Durch eine Verwendung einer auf der fünften ATM-Anpassungsschicht AAL5 basierenden Verbindung besteht die Möglichkeit über die Verbindung nur Daten derjenigen Kanäle des IOM-2-Datenformats zu übermitteln, über die aktuell Daten zu übermitteln sind.

In einem nächsten Schritt erfolgt eine Übermittlung der für den Aufbau einer Verbindung zwischen dem Kommunikationsendgerät KE1,...,KEn und der Vermittlungsanlage PBX notwendigen Signalisierungsinformationen über den Steuerkanal D, d.h. es wird eine logische Verbindung zwischen dem Kommunikationsendgerät KE1,...,KEn und der Vermittlungsanlage PBX aufgebaut. Anschließend erfolgt die bidirektionale Nutzdatenübermittlung zwischen dem Kommunikationsendgerät KE1,...,KEn und der Vermittlungsanlage PBX über einen oder alternativ über beide Nutzdatenkanäle B1, B2. Soll nachfolgend die logische Verbindung zwischen dem Kommunikationsendgerät KE1,...,KEn und der Vermittlungsanlage PBX - beispielsweise infolge eines Auflegens des Hörers am Kommunikationsendgerät KE1,...,KEn - beendet werden, so erfolgt dies durch eine dementsprechende Signalisierung zwischen dem Kommunikationsendgerät KE1,...,KEn und der Vermittlungsanlage PBX über den Steuerkanal D. Abschließend baut die ATM-Übergabeeinheit ATM-HUB die Verbindung zwischen der Vermittlungsanlage PBX und der ATM-Übergabeeinheit ATM-HUB über das ATM-basierte Kommunikationsnetz ATM-KN wieder ab. Das Kommunikationsendgerät KE1,...,KEn befindet sich daraufhin wieder im Ruhezustand.

## Patentansprüche

1. Verfahren zur Datenübermittlung zwischen zwei Kommunikationseinrichtungen über ein paket-orientiertes Kommunikationsnetz (ATM-KN),
wobei für eine Datenübermittlung zwischen den Kommunikationseinrichtungen ein zeitschlitz-orientiertes, aus einer periodischen Folge von kanalindividuellen Informationssegmenten (B1, B2, M, D) gebildetes Datenformat (IOM-2) vorgesehen ist,
**dadurch gekennzeichnet,**
**daß** für eine Datenübermittlung über das paket-orientierte Kommunikationsnetz (ATM-KN) ein Nutzdatenbereich (N) eines der Datenübermittlung dienenden Datenpaketes (ATMZ) in mindestens ein erstes Teilpaket (TP1) erster Länge und in ein zweites Teilpaket (TP2) zweiter Länge unterteilt wird, wobei in einem ersten Teilpaket (TP1) jeweils Daten desgleichen kanalindividuellen Informationssegmentes (B1, B2, M, D) übermittelt werden.

2. Verfahren nach Anspruch 1,
**dadurch gekennzeichnet,**
**daß** die Datenübermittlung zwischen Kommunikationsendgeräten (KE1,...,KEn) und einer Vermittlungsanlage (PBX) erfolgt, wobei die Kommunikationsendgeräte (KE1,...,KEn) über mindestens eine Übergabeeinheit (ATM-HUB) mit dem paket-orientierten Kommunikationsnetz (ATM-KN) verbunden sind.

3. Verfahren nach Anspruch 1 oder 2,
**dadurch gekennzeichnet**,
-daß den kanalindividuellen―Informationssegment (B1, B2, M, D) jeweils ein erstes Teilpaket (TP1) zuweisbar ist, wobei die Übermittlung eines ersten Teilpaketes (TP1) unterbindbar ist.

4. Verfahren nach einem der vorhergehenden Ansprüche,
**dadurch gekennzeichnet,**
**daß** in dem zweiten Teilpaket (TP2) Fülldaten übermittelt werden, und
**daß** die Länge des zweiten Teilpaketes (TP2) derart gewählt wird, daß die Gesamtlänge aus den übermittelten ersten Teilpaketen (TP1) und dem zweiten Teilpaket (TP2) der Länge des Nutzdatenbereiches (N) des Datenpaketes (ATMZ) entspricht.

5. Verfahren nach einem der vorhergehenden Ansprüche,
**dadurch gekennzeichnet,**
**daß** das zweite Datenpaket (TP2) mindestens 8 Byte lang ist.

6. Verfahren nach einem der vorhergehenden Ansprüche,
**dadurch gekennzeichnet,**
**daß** die ersten Teilpakete (TP1) jeweils einen Zellkopf (SH) mit einer Segment-Identifizierung (CI) und einer Längen-Identifizierung (LI) aufweisen,
wobei durch die Segment-Identifizierung (CI) eine Zuordnung des jeweiligen ersten Teilpaketes (TP1) zu einem kanalindividuellen Informationssegment (B1, B2, M, D) erfolgt, und
wobei durch die Längen-Identifizierung (LI) die Anzahl der im jeweiligen ersten Teilpaket (TP1) übermittelten Daten festgelegt wird.

7. Verfahren nach einem der vorhergehenden Ansprüche,
**dadurch gekennzeichnet,**
**daß** das zeitschlitz-orientierte Datenformat (IOM-2) das standardisierte IOM-2-Datenformat ist.

8. Verfahren nach einem der vorhergehenden Ansprüche,
**gekennzeichnet dadurch,**
**daß** eine Datenübermittlung über das paket-orientierte Kommunikationsnetz (ATM-KN) auf Basis des ATM-Datenformats (Asynchroner Transfer Modus) erfolgt.

9. Verfahren nach Anspruch 8,
**gekennzeichnet dadurch,**
**daß** die bidirektionale Umwandlung zwischen dem zeitschlitz-orientierten Datenformat (IOM-2) und dem ATM-Datenformat gemäß einer als fünften ATM-Anpassungsschicht AAL5 bekannten Vereinbarung erfolgt.

10. Verfahren nach Anspruch 8 oder 9,
**gekennzeichnet dadurch,**
**daß** zwischen einem Kommunikationsendgerät (KE1,...,KEn) und
der Vermittlungsanlage (PBX) zu übermittelnde Daten über eine bestehende Festverbindung, zwischen der Vermittlungsanlage (PBX) und derjenigen ATM-Übergabeeinheit (ATM-HUB), über die das Kommunikationsendgerät (KE1,..., KEn) mit dem ATM-basierten Kommunikationsnetz (ATM-KN) verbunden ist übermittelt werden.

11. Verfahren nach Anspruch 8 oder 9,
**gekennzeichnet dadurch,**
**daß** zwischen einem Kommunikationsendgerät (KE1,...,KEn) und
der Vermittlungsanlage (PBX) zu übermittelnde Daten über eine, für diese Datenübermittlung individuell aufgebaute Verbindung zwischen der Vermittlungsanlage (PBX) und derjenigen ATM-Übergabeeinheit (ATM-HUB), über die das Kommunikationsendgerät (KE1,..., KEn) mit dem ATM-basierten Kommunikationsnetz (ATM-KN) verbunden ist, übermittelt werden.

## Claims

1. Method for data transmission between two communications devices via a packet-oriented communications network (ATM-KN), a time-slot-oriented data format (IOM-2) formed from a periodic sequence of channel-specific information segments (B1, B2, M, D) being provided for data transmission between the communications devices,
**characterized in that**
for data transmission via the packet-oriented communications network (ATM-KN) , a user data area (N) of a data packet (ATMZ) used for the data transmission is subdivided into at least one first subpacket (TP1) of a first length and into a second subpacket (TP2) of a second length, data of the same channel-specific information segment (B1, B2, M, D) being transmitted in each case in a first subpacket (TP1).

2. Method according to Claim 1,
**characterized in that**
the data transmission takes place between communications terminal devices (KE1,..., KEn) and a switching system (PBX), the communications terminal devices (KE1,..., KEn) being connected via at least one transfer unit (ATM-HUB) to the packet-oriented communications network (ATM-KN).

3. Method according to Claim 1 or 2,
**characterized in that**
a first subpacket (TP1) can be allocated in each case to the channel-specific information segments (B1, B2, M, D), the transmission of a first subpacket (TP1) being suppressible.

4. Method according to one of the previous claims,
**characterized in that**
dummy data are transmitted in the second subpacket (TP2), and
**in that** the length of the second subpacket (TP2) is selected in such a way that the total length of the transmitted first subpackets (TP1) and the second subpacket (TP2) corresponds to the length of the user data area (N) of the data packet (ATMZ).

5. Method according to one of the previous claims,
**characterized in that**
the second data packet (TP2) is at least 8 bytes long.

6. Method according to one of the previous claims,
**characterized in that**
the first subpackets (TP1) in each case have one cell header (SH) with a segment identifier (CI) and a length identifier (LI),
the respective first subpacket (TP1) being allocated by the segment identifier (CI) to a channel-specific information segment (B1, B2, M, D), and the number of data transmitted in the respective first subpacket (TP1) being defined by the length identifier (LI).

7. Method according to one of the previous claims,
**characterized in that**
the time-slot-oriented data format (IOM-2) is the standardized IOM-2 data format.

8. Method according to one of the previous claims,
**characterized in that**
data are transmitted via the packet-oriented communications network (ATM-KN) on the basis of the ATM data format (Asynchronous Transfer Mode).

9. Method according to Claim 8,
**characterized in that**
the two-way conversion between the time-slot-oriented data format (IOM-2) and the ATM data format is carried out according to an agreement known as the fifth ATM adaptation layer AAL5.

10. Method according to Claim 8 or 9,
**characterized in that**
data to be transmitted between a communications terminal device (KE1,..., KEn) and the switching system (PBX) are transmitted via an existing dedicated connection between the switching system (PBX) and the ATM transfer unit (ATM-HUB) via which the communications terminal device (KE1,..., KEn) is connected to the ATM-based communications network (ATM-KN).

11. Method according to Claim 8 or 9,
**characterized in that**
data to be transmitted between a communications terminal device (KE1,..., KEn) and the switching system (PBX) are transmitted via a connection individually set up for this data transmission between the switching system (PBX) and the ATM transfer unit (ATM-HUB) via which the communications terminal device (KE1,..., KEn) is connected to the ATM-based communications network (ATM-KN) .

## Revendications

1. Procédé pour la transmission de données entre deux dispositifs de communication au moyen d'un réseau de communication (ATM-KN) orienté paquet,
un format de données (IOM-2) orienté créneau temporel, constitué d'une succession périodique de segments d'information (B1, B2, M, D) individuels par canal étant prévu pour une transmission de données entre les dispositifs de communication,
**caractérisé en ce que**
pour une transmission de données par le réseau de communication (ATM-KN) orienté paquet, une plage de données utiles (N) d'un paquet de données (ATMZ) servant à la transmission de données est subdivisée en au moins un premier paquet partiel (TP1) de première longueur et un second paquet partiel (TP2) de seconde longueur, des données du même segment d'information (B1, B2, M, D) individuel par canal étant transmises dans un premier paquet partiel (TP1).

2. Procédé selon la revendication 1,
**caractérisé en ce que**
la transmission de données s'effectue entre des terminaux de communication (KE1, ..., KEn) et un équipement de commutation (PBX), les terminaux de communication (KE1, ..., KEn) étant reliés par au moins une unité de transfert (ATM-HUB) au réseau de communication (ATM-KN) orienté paquet.

3. Procédé selon la revendication 1 ou 2,
**caractérisé en ce que**,
à chacun des segments d'information (B1, B2, M, D) individuels par canal, on peut attribuer un premier paquet partiel (TP1), la transmission d'un premier paquet partiel (TP1) pouvant être supprimée.

4. Procédé selon l'une quelconque des revendications précédentes,
**caractérisé en ce que**
les données de remplissage sont transmises dans le second paquet partiel (TP2), et
**en ce que** la longueur du second paquet partiel (TP2) est choisie de telle sorte que la longueur totale constituée des premiers paquets partiels (TP1) transmis et du second paquet partiel (TP2) correspond à la longueur de la plage de données utiles (N) du paquet de données (ATMZ).

5. Procédé selon l'une quelconque des revendications précédentes,
**caractérisé en ce que**
le second paquet de données (TP2) a une longueur d'au moins 8 bytes.

6. Procédé selon l'une quelconque des revendications précédentes,
**caractérisé en ce que**
les premiers paquets partiels (TP1) présentent chacun une entête de cellule (SH) avec une identification de segment (CI) et une identification de longueur (LI),
une attribution du premier paquet partiel (TP1) respectif à un segment d'information (B1, B2, M, D) individuel par canal s'effectuant par l'identification du segment (CI) et le nombre des données transmises dans le premier paquet partiel (TP1) respectif étant défini par l'identification de longueur (LI).

7. Procédé selon l'une quelconque des revendications précédentes,
**caractérisé en ce que**
le format de données (IOM-2) orienté créneau temporel est le format de données (IOM-2) standardisé.

8. Procédé selon l'une quelconque des revendications précédentes,
**caractérisé en ce que**
une transmission de données s'effectue par le réseau de communication (ATM-KN) orienté paquet sur la base du format de données ATM (asynchronous transfer mode).

9. Procédé selon la revendication 8,
**caractérisé en ce que**
la conversion bidirectionnelle entre le format de données (IOM-2) orienté créneau temporel et le format de données ATM s'effectue selon un accord connu comme cinquième couche d'adaptation de ATM AAL5.

10. Procédé selon la revendication 8 ou 9,
**caractérisé en ce que**
les données à transmettre entre un terminal de communication (KE1, ... KEn) et l'équipement de commutation (PBX) sont transmises au moyen d'une liaison fixe existante, entre l'équipement de commutation (PBX) et l'unité de transfert de ATM (ATM-HUB), par laquelle le terminal de communication (KE1, ... KEn) est relié au réseau de communication (ATM-KN) basé sur ATM.

11. Procédé selon la revendication 8 ou 9,
**caractérisé en ce que**
des données à transmettre entre un terminal de communication (KE1, ... KEn) et l'équipement de commutation (PBX) sont transmises au moyen d'une liaison établie individuellement pour cette transmission de données entre l'équipement de commutation (PBX) et l'unité de transfert de ATM (ATM-HUB), par laquelle le terminal de communication (KE1, ... KEn) est relié au réseau de communication (ATM-KN) basé sur ATM.
